(19) **Europäisches Patentamt**

**European Patent Office**

**Office européen des brevets**

(11) **EP 1 223 709 B1**

(12) **EUROPÄISCHE PATENTSCHRIFT**

(45) Veröffentlichungstag und Bekanntmachung des Hinweises auf die Patenterteilung:
**26.10.2005 Patentblatt 2005/43**

(51) Int Cl.⁷: **H04L 12/26**, H04L 12/24

(21) Anmeldenummer: **01000764.9**

(22) Anmeldetag: **18.12.2001**

(54) **Verfahren und Vorrichtung zum rechnergestützten Überwachen eines Telekommunikationsnetzes**

Method and apparatus for computer aided monitoring of a telecommunications network

Méthode et dispositif pour la surveillance assistée par ordinateur d'un réseau de télécommunications

(84) Benannte Vertragsstaaten:
**DE FR GB IT**

(30) Priorität: **12.01.2001 DE 10101286**

(43) Veröffentlichungstag der Anmeldung:
**17.07.2002 Patentblatt 2002/29**

(73) Patentinhaber: **SIEMENS AKTIENGESELLSCHAFT 80333 München (DE)**

(72) Erfinder:
• **Ensel, Christian 81671, München (DE)**
• **Sterzing, Volkmar 85579, Neubiberg (DE)**

(56) Entgegenhaltungen:
**EP-A- 1 017 203**     **WO-A-01/80492**
**US-A- 6 073 089**     **US-A- 6 125 105**

EP 1 223 709 B1

**Beschreibung**

Die Erfindung betrifft ein Verfahren und eine Vorrichtung zum rechnergestützten Überwachen eines Telekommunikationsnetzes sowie ein Verfahren zum rechnergestützten Trainieren eines statistischen Schätzers zum Überwachen eines Telekommunikationsnetzes.

In einem üblichen Telekommunikationsnetz, beispielsweise dem Internet, sind eine Vielzahl sehr unterschiedlicher kommunikationsfähiger Geräte miteinander vernetzt, das heißt gekoppelt.

Unter einem Telekommunikationsnetz ist in diesem Zusammenhang ein Kommunikationsnetz zu verstehen, mittels dem unterschiedliche elektronische Geräte miteinander kommunizieren können, beispielsweise

- ein Kommunikationsnetz, welches eine Kommunikation gemäß den Internet-Protokollen ermöglicht,
- ein lokales Kommunikationsnetz (**L**ocal **A**rea **N**etwork, LAN),
- ein öffentliches Kommunikationsnetz, welches auch als **W**ide **A**rea **N**etwork (WAN) bezeichnet wird,
- ein Funknetz, beispielsweise gemäß dem GSM-Standard oder dem UMTS-Standard.

In einem solchen inhomogenen Kommunikationsnetz, das heißt in einem Kommunikationsnetz mit sehr vielen unterschiedlichen elektronischen Geräten, die nicht auf dem gleichen Betriebssystem, Kommunikationsmechanismus, etc., basieren, besteht oftmals das Erfordernis, diese Geräte gemeinsam zu verwalten und/oder zu überwachen, beispielsweise hinsichtlich eines Ausfalls eines der in dem Kommunikationsnetz miteinander gekoppelten Geräten oder hinsichtlich unterschiedlicher Eindringversuche oder Angriffsversuche, die ein unbefugtes Eindringen in die gespeicherten Daten eines solchen Geräts darstellen.

Durch die Vielzahl an unterschiedlichen Arten von mit dem Kommunikationsnetz miteinander gekoppelten Geräten, beispielsweise

- Vermittlungseinheiten,
- kommunikationsfähige Endgeräte wie

  - Drucker,
  - Server-Computer,
  - Workstations,
  - Personal Computer,
  - Laptops,
  - Personal Digital Assistants (PDAs), etc.

und aufgrund der Komplexität der unterschiedlichen Arten der Kommunikationsverbindungen zwischen den einzelnen Geräten, die auf unterschiedlichen Kommunikationsstandards, d.h. Kommunikationsprotokollen, basieren können, sind derzeit Geräte in einem Telekommunikationsnetz nur in sehr beschränktem Ausmaß automatisiert zentral zu verwalten und zu überwachen.

Weiterhin besteht oftmals das Erfordernis, nicht nur die Geräte selbst, sondern auch Dienste, das heißt im Sinne der weiteren Beschreibung beispielsweise Anwendungsprogramme in Ausführung, wie ein Webserver, ein Dateiserver, Datenbanken, verschiedene Anwendungsserver oder X11-Terminals, die ebenfalls miteinander über das Telekommunikationsnetz kommunizieren, zu verwalten und/oder zu überwachen.

Aufgrund einer derzeit mangelhaften automatisierten zentralen Überwachungsmöglichkeit ist es nur schwer, wenn überhaupt, möglich, einen Ausfall oder einen Angriffsversuch auf ein Gerät und/oder einen Dienst zu erkennen und rechtzeitig auf einen solchen Ausfall bzw. Angriffsversuch zu reagieren.

Weiterhin wird oftmals durch einen Ausfall oder einen Angriffsversuch eines Geräts bzw. eines Dienstes eine sehr hohe Anzahl von Fehlernachrichten erzeugt, die nur schwer zu erfassen und hinsichtlich der zugrunde liegenden Fehlerursache bzw. Angriffsursache zu analysieren.

Bei heutigen bekannten Verwaltungswerkzeugen für die Behebung von Störungen in dem Kommunikationsnetz erfolgt keine systematische Überwachung des Telekommunikationsnetzes hinsichtlich sicherheitsmäßig auffälliger oder bedenklicher Aktivitäten von Komponenten in dem Telekommunikationsnetz, die auf einer Gesamtsicht auf das Kommunikationsnetz beruht.

Weiterhin existieren auf der Ebene der OSI-Schicht 2 und der OSI-Schicht 3 des **O**pen **S**ystem **I**nterconnection-Referenzmodells (OSI-Referenzmodell) der **I**nternational **O**rganization for **S**tandardization (ISO) auf unterschiedliche Kommunikationsprotokolle eingeschränkte Möglichkeiten zur Erkennung der Topologie, der Struktur von miteinander gekoppelten Kommunikationsgeräten in einem Telekommunikationsnetz.

Diese grundsätzlich auf vorhandene Strukturen beschränkte Erkennung erlaubt jedoch keine Rückschlüsse auf tatsächliche Beziehungen zwischen den einzelnen Geräten in dem Telekommunikationsnetz im Sinne des aktiven Verhaltens der einzelnen Geräte und/oder der verwendeten Dienste und deren Nutzung.

Diese Beziehungen lassen sich gemäß den bekannten Kommunikationsprotokollen auch nicht automatisch in ausreichend großem Maße extrahieren.

Auf der Ebene höherer OSI-Schichten, beispielsweise der Darstellungsschicht (OSI-Schicht 6) oder der Anwendungsschicht (OSI-Schicht 7) des OSI-Referenzmodells, auf der üblicherweise die Anwendungsprogramme implementiert sind, werden gemäß dem Stand der Technik die einzelnen Abhängigkeitsbeziehungen zwischen den Kommunikationsgeräten bzw. den verwendeten Diensten manuell eingegeben und in unterschiedlichen Sprachen und Darstellungsformen entsprechend dem verwendeten Protokollformat formuliert.

Diese Vorgehensweise eignet sich jedoch aufgrund der Ermangelung einer einheitlichen allgemeinen Beschreibung der Struktur des Telekommunikationsnetzes nicht für den Einsatz in einem realen größeren Telekommunikationsnetz.

Insbesondere bei einer erhöhten Anzahl von Geräten und/oder Diensten, die über das Telekommunikationsnetz miteinander kommunizieren, ist eine manuelle Überwachung der einzelnen Geräte bzw. Dienste in dem Telekommunikationsnetz nicht mehr praktikabel bzw. überhaupt nicht mehr möglich.

Aus US-A-5073089 ist bekannt, dass ein Telekommunikationsnetz mit einer Vielzahl von kommunikationsfähigen Geräten rechnergestützt überwacht werden kann. Hierbei werden für das Telekommunikationsnetz allgemeine Variablen ermittelt. Die allgemeinen Variablen geben hierbei Aufschluss darüber, ob sich das Telekommunikationsnetz in einem ordnungsgemäßen oder einem fehlerbehafteten Zustand befindet. Weiterhin werden zusätzliche Variablen ermittelt, welche Aufschluss darüber geben können, welche Störung in Form eines Fehlers vorliegt. Als Variable werden hierbei allgemeine Parameter des Kommunikationsnetzes herangezogen, etwa die Netzlast. Die Variablen können für das gesamte Telekommunikationsnetz oder auch einzelne Geräte darin ermittelt werden. Aus Abweichungen der Variablen gegenüber einem Referenzprofil wird auf Fehler im Telekommunikationsnetz geschlossen.

Aus US-A-6125105 ist ein Verfahren zur Vorhersage zukünftiger Zustände eines Telekommunikationsnetzes mit einem neuronalen Netz bekannt, mit welchem der zukünftige Ressourcenbedarf des Kommunikationsnetzes, etwa bezüglich der Bandbreite ermittelt und entsprechend bereit gestellt wird.

Somit liegt der Erfindung das Problem zugrunde, kommunikationsfähige Geräte und/oder Dienste, die über ein Telekommunikationsnetz miteinander kommunizieren, automatisiert und auf verglichen mit dem Stand der Technik einfachere Weise zu überwachen.

Das Problem wird durch das Verfahren und die Vorrichtung zum rechnergestützten Überwachen eines Telekommunikationsnetzes sowie durch das Verfahren zum rechnergestützten Trainieren eines statistischen Schätzers zum Überwachen eines Telekommunikationsnetzes, die Computerlesbaren Speichermedien sowie die Computerprogramm-Elemente mit den Merkmalen gemäß den unabhängigen Patentansprüchen gelöst.

Bei einem Verfahren zum rechnergestützten Überwachen eines Telekommunikationsnetzes, welches eine Vielzahl von kommunikationsfähigen Geräten und/oder Diensten aufweist, werden von zumindest einem Teil der Geräte bzw. Dienste Kommunikationsparameter ermittelt, die die Aktivität des jeweiligen Gerätes bzw. Dienstes beschreiben.

Unter Aktivität eines Geräts bzw. eines Dienstes ist in diesem Zusammenhang beispielsweise die Rechnerauslastung eines Prozessors, den das Gerät aufweist bzw. der den Dienst ausführt, oder auch die Kommunikationsaktivität mit anderen Geräten bzw. Diensten über das Kommunikationsnetz, das heißt der Grad des Sendens und des Empfangens von Daten, vorzugsweise von digitalen Daten, die in Datenpakete gruppiert sind, zu verstehen.

Die ermittelten Kommunikationsparameter werden mittels eines mit Trainingsdaten trainierten statistischen Schätzers mit einem aus ermittelten Abhängigkeiten zwischen den Geräten ermittelten Normal-Abhängigkeitsbereich verglichen und aus dem Vergleich wird bestimmt, ob das Kommunikationsverhalten eines oder mehrerer Geräte bzw. Dienste, die an das Telekommunikationsnetz angeschlossen sind, sich von deren Normalverhalten, das heißt von deren ungestörten Verhalten gemäß einem vorgegebenen Kriterium, beispielsweise um einen vorgegebenen Toleranzbereich, unterscheidet.

Anders ausgedrückt bedeutet dies, dass ermittelt wird, ob ein oder mehrere Geräte bzw. Dienste sich in ihrem Verhalten hinsichtlich eines vorgegebenen Vergleichskriteriums gegenüber dem zuvor ermittelten Normal-Abhängigkeitsbereich in vorgegebener Weise unterscheiden oder nicht.

Bei einem Verfahren zum rechnergestützten Trainieren eines rechnergestützten Schätzers, welcher zum Überwachen eines Telekommunikationsnetzes mit einer Vielzahl von kommunikationsfähigen Geräten und/oder Diensten eingesetzt wird, werden von zumindest einem Teil der Geräte und/oder Dienste Kommunikationsparameter ermittelt, die die Aktivität des jeweiligen Gerätes bzw. Dienstes beschreiben.

Aus den Aktivitätsdaten, im Weiteren auch als Aktivitätsparameter bezeichnet, also den Kommunikationsparametern bzw. der Rechnerauslastung der Geräte bzw. Dienste werden mögliche Abhängigkeiten zwischen den Geräten bzw. Diensten in Bezug auf deren Kommunikation miteinander ermittelt und aus den ermittelten Abhängigkeiten wird ein Normal-Abhängigkeitsbereich ermittelt, mit dem Abhängigkeiten zwischen den Geräten bzw. Diensten in einem Zustand im Wesentlichen ohne Störung der Geräte bzw. Dienste und ohne Angriffsversuche von einem Gerät oder durch ein Gerät bzw. von einem Dienst oder durch einen Dienst, beschrieben werden.

Mit dem üblichen Verhalten der Geräte bzw. Dienste, das heißt mit dem Normal-Abhängigkeitsbereich wird der statistische Schätzer trainiert.

Eine Vorrichtung zum rechnergestützten Überwachen eines Telekommunikationsnetzes mit einer Vielzahl von kommunikationsfähigen Geräten weist einen Prozessor auf, mit dem die oben beschriebenen Verfahrensschritte sowohl des Verfahrens zur Überwachung als auch des Verfahrens zum Trainieren des statistischen Schätzers zum Überwachen der kommunikationsfähigen Geräte, die mit dem Telekommunikationsnetz gekoppelt sind, durchgeführt werden können.

Weiterhin sind in Computerlesbaren Speichermedien Computerprogramme zum rechnergestützten Überwachen eines Telekommunikationsnetzes sowie zum Trainieren eines statistischen Schätzers zum Überwachen eines Telekommunikationsnetzes gespeichert, die, wenn sie von einem Prozessor ausgeführt werden, die oben beschriebenen Verfahrensschritte der entsprechenden Verfahren aufweisen.

Ferner weisen Computerprogramm-Elemente zum rechnergestützten Überwachen des Telekommunikationsnetzes sowie zum rechnergestützten Trainieren eines statistischen Schätzers zum Überwachen eines Telekommunikationsnetzes die oben beschriebenen Verfahrensschritte der entsprechenden Verfahren auf, wenn sie von einem Prozessor ausgeführt werden.

Durch die Erfindung wird es erstmals möglich, auf Ebene der Anwendungsschicht oder der Darstellungsschicht des OSI-Referenzmodells eine Vielzahl unterschiedlichster Geräte bzw. Dienste hinsichtlich derer Ausfälle bzw. bezüglich möglichen Angriffsversuchen zu überwachen, obwohl die einzelnen mit dem Telekommunikationsnetz gekoppelten Geräte bzw. Dienste sehr inhomogen, das heißt mittels unterschiedlichster Protokolle auf unterschiedlichen Schichten des OSI-Referenzmodells arbeiten.

Ein weiterer erheblicher Vorteil der Erfindung ist darin zu sehen, dass auch automatisiert die Abhängigkeiten der einzelnen Geräte untereinander, gemäß einer Ausgestaltung der Erfindung sogar paarweise, berücksichtigt werden können und somit in die automatisierte Überwachung mit einbezogen werden können.

Auf diese Weise wird die Überwachung von Geräten und Diensten sehr effizient automatisch durchführbar und somit kostengünstig.

Ferner wird die automatisierte Überwachung insbesondere durch eine auf statistischen Methoden basierende Analyse großer anfallender Datenmengen hinsichtlich einer möglichen Fehlerursache bzw. eines möglichen Angriffsversuchs erheblich verbessert und effizienter gestaltet.

Bevorzugte Weiterbildungen der Erfindung ergeben sich aus den abhängigen Ansprüchen.

Zumindest ein Teil der Geräte kann als kommunikationsfähiges Endgerät ausgestaltet sein.

Die Ermittlung der Aktivitätsparameter kann in einem vorgegebenen Zeitintervall, welches für alle oder zumindest einen Teil der Geräte in dem Kommunikationsnetz gleich oder unterschiedlich sein kann, erfolgen.

Auf diese Weise wird auch eine zeitliche Veränderung des Verhaltens der einzelnen Geräte bzw. Dienste insbesondere hinsichtlich der Kommunikationsaktivität der einzelnen Geräte bzw. Dienste möglich, wodurch die Genauigkeit der Überwachung weiter verbessert wird.

Gemäß einer weiteren Ausgestaltung der Erfindung ist es vorgesehen, dass die Ermittlung der Aktivitätsparameter von dem jeweiligen Gerät selbst durchgeführt wird und die ermittelten Aktivitätsparameter werden an eine zentrale Verwaltungseinheit übertragen, in der die weiteren Verfahrensschritte durchgeführt werden.

So ist es beispielsweise gemäß einer Weiterbildung der Erfindung vorgesehen, dass unter Einsatz eines Netzmanagementprotokolls, beispielsweise mittels des **S**imple **N**etwork **M**anagement **P**rotokolls (SNMP) in einer **M**anagement **I**nformation **B**ase (MIB) die ermittelten Aktivitätsparameter gespeichert werden und entsprechend gemäß dem SNMP-Protokoll von der Verwaltungseinheit die Aktivitätsparameter aus der MIB abgefragt werden und an die Verwaltungseinheit übertragen werden.

Gemäß einer alternativen Ausgestaltung der Erfindung ist es vorgesehen, dass die Ermittlung der Aktivitätsparameter von einer Aktivitätsparameter-Ermittlungseinheit außerhalb des jeweiligen Geräts durchgeführt wird, das heißt beispielsweise von einer Vermittlungeinheit, die unterschiedliche Kommunikationsparameter an einer äußeren Schnittstelle des jeweiligen Geräts ermittelt.

Für den Fall, dass die Aktivitätsparameter beispielsweise die Anzahl gesendeter oder von dem jeweiligen Gerät empfangener Datenpakete ist, wird als Kommunikationsparameter die Anzahl der unmittelbar mit dem jeweiligen Gerät gekoppelten Vermittlungeinheit ermittelten Datenpakete verwendet.

Die Abhängigkeiten können kommunikationsbedingte Abhängigkeiten zwischen den Geräten bzw. Diensten sein, die gemäß einer Ausgestaltung der Erfindung eine Richtungsabhängigkeit hinsichtlich der Kommunikationsrichtung zwischen den einzelnen Geräten bzw. Diensten aufweisen können.

Unter einer Richtungsabhängigkeit ist beispielsweise zu verstehen, dass unterschieden wird, ob ein Gerät bzw. ein Dienst eine Nachricht oder ein Datenpaket sendet oder empfängt.

Durch diese Weiterbildung wird die Überwachung der Geräte bzw. Dienste in dem Telekommunikationsnetz weiter in ihrer Genauigkeit verbessert, da ein zusätzlicher Parameter, nämlich die Richtungsabhängigkeitsangabe, berücksichtigt wird.

Die unmittelbar von aus den Kommunikationsdaten ermittelten Daten können einer Vorverarbeitung unterschiedlicher Art, beispielsweise einer Filterung oder einer statistischen Voranalyse unterzogen werden und aus den vorverarbeiteten Daten können die Kommunikationsparameter ermittelt werden, die zur Überwachung unmittelbar verwendet werden.

Durch die Vorverarbeitung wird eine weitere Effizienzerhöhung im Rahmen der Überwachung erreicht.

Es können insbesondere für die kommunikationsbedingten Abhängigkeiten zwischen den Geräten jeweils paarweise Abhängigkeiten für jeweils ein Gerätepaar bzw. ein Dienstepaar, das heißt jeweils für alle möglichen Kombinationen zweier in dem Telekommunikationsnetz miteinander gekoppelten Geräte bzw. Dienste die Aktivitätsparameter ermittelt werden.

Auf diese Weise wird eine paarweise Betrachtung der Abhängigkeiten ermöglicht und somit die Ermittlung möglicher Fehlerursachen weiter vereinfacht.

Gemäß einer weiteren Ausgestaltung der Erfindung ist es vorgesehen, dass die ermittelten Aktivitätsparameter der Gerätepaare bzw. Dienstepaare in Form einer Matrix gespeichert werden und dass der Normal-Abhängigkeitsbereich aus der Struktur der ermittelten Matrix bestimmt wird.

Somit wird eine strukturelle Abhängigkeit zwischen den einzelnen Zeilen bzw. Spalten der Matrix, in denen die jeweiligen Abhängigkeiten angegeben sind, das heißt beispielsweise die Kommunikation zwischen den einzelnen Geräten bzw. Dienste, die jeweils eine Zeile bzw. eine Spalte der Matrix repräsentieren, ermittelt.

Die Struktur der gebildeten Matrix wird mittels des statistischen Schätzers "erlernt" und es erfolgt im Rahmen der Anwendungsphase im Rahmen der Überwachung der jeweiligen Geräte eine im Wesentlichen graphische und somit sehr einfache strukturelle Überwachung mittels des statistischen Schätzers.

Die Aktivitätsparameter können beispielsweise eine der folgenden Parameter sein:

- eine Anzahl der von dem jeweiligen Gerät bzw. Dienst gesendete Datenpakete oder von dem jeweiligen Gerät bzw. Dienst empfangene Datenpakete,
- die Prozessorauslastung des jeweiligen Geräts,
- die Anzahl vorgegebener Systemfunktionsaufrufe beispielsweise von Betriebssystemfunktionen des Betriebssystems, welches das jeweilige kommunikationsfähige Gerät verwendet bzw. das den jeweiligen Dienst durchführt,
- die Existenz vorgegebener Prozesse bzw. vorgegebener Computerprogramme während des Zeitraums, während dessen die Kommunikationsparameter für das jeweilige Gerät bzw. den jeweiligen Dient ermittelt werden.

Als statistischer Schätzer kann beispielsweise ein grundsätzlich beliebiges neuronales Modell, das heißt ein neuronales Netz oder auch ein Neuro-Fuzzy-Modell verwendet werden, welches mit bekannten Trainingsmethoden und eventuell zusätzlich mit sogenannten Pruning-Verfahren trainiert wird.

Für den Fall, dass sich mindestens ein Gerät bzw. Dienst in dem Telekommunikationsnetz in vorgegebenem Maße von dem Kriterium hinsichtlich des Normal-Abhängigkeitsbereichs in seinem Verhalten unterscheidet, wird ein Alarmsignal generiert und einem Benutzer des Überwachungssystems dargestellt, beispielsweise als Audiosignal oder auch auf einem Bildschirm als graphisches Alarmsignal.

Auf diese Weise wird automatisiert dem Verwalter eines Telekommunikationsnetzes eine Warnung zugänglich gemacht, dass sich mit einer entsprechend großer Wahrscheinlichkeit ein Gerät bzw. Dienst in dem Telekommunikationsnetz befindet, welches bzw. welcher gestört ist oder sogar ausgefallen ist oder welches bzw. welcher einen Angriffsversuch auf ein anderes Gerät bzw. auf einen anderen Dienst startet oder welches bzw. welcher selbst mit einem unbefugten Zugriffsversuch angegriffen wird.

In diesem Zusammenhang ist anzumerken, dass das Training des statistischen Schätzers sowohl Offline als auch zusätzlich oder alternativ Online, das heißt während der Anwendungsphase, während der schon eine Überwachung des Telekommunikationsnetzes stattfindet, erfolgen kann.

Gemäß einer alternativen Ausgestaltung ist es ferner vorgesehen, den statistischen Schätzer als ein oder mehrere miteinander gekoppelter gepulster Neuronen auszugestalten.

Somit kann die Erfindung sowohl zum Ermitteln einer Störung eines Geräts bzw. Dienst in dem Telekommunikationsnetz und/oder zum Ermitteln eines unbefugten Zugriffsversuchs auf ein oder von einem Gerät Dienst in dem Telekommunikationsnetz eingesetzt werden.

Die oben dargestellten Ausgestaltungen der Erfindung betreffen sowohl die Verfahren, die Vorrichtungen als auch die Computerlesbaren Speichermedien und die Computerprogramm-Elemente.

Die Erfindung kann sowohl mittels einer speziellen elektronischen Schaltung, d.h. in Hardware, als auch mittels eines Computerprogramms, d.h. in Software, implementiert sein.

Ein Ausführungsbeispiel der Erfindung ist in den Figuren dargestellt und wird im Weiteren näher erläutert.

Es zeigen

Figur 1    eine Skizze eines Telekommunikationsnetzes gemäß einem Ausführungsbeispiel der Erfindung;

Figur 2 eine Skizze der Struktur eines neuronalen Modells, mit dem die Abhängigkeit der Aktivitätsparameter zwischen zwei kommunikationsfähigen Geräten gemäß einem Ausführungsbeispiel der Erfindung repräsentiert wird;

Figur 3 eine Skizze, anhand der ein Mustervergleich zweier Matrizen dargestellt ist, in denen die Abhängigkeiten der Aktivitätsparameter zwischen den jeweiligen Geräten in dem Telekommunikationsnetz dargestellt sind;

Figur 4 ein Ablaufdiagramm, in dem die einzelnen Verfahrensschritte des Verfahrens gemäß einem Ausführungsbeispiel der Erfindung dargestellt sind.

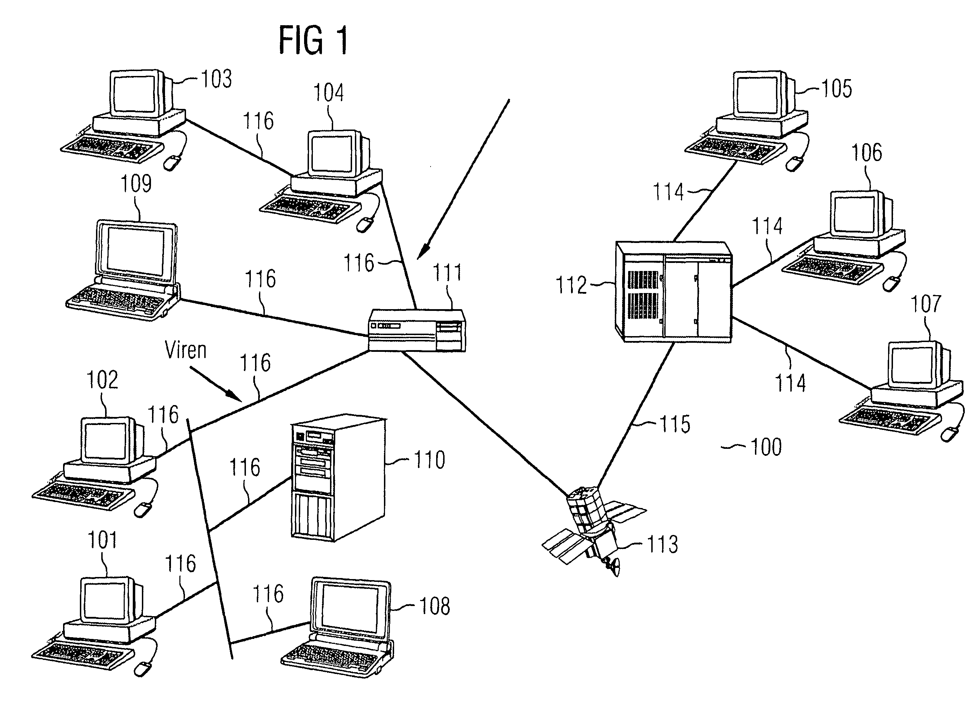

**Fig.1** zeigt ein Telekommunikationsnetz 100 mit einer Vielzahl kommunikationsfähiger Geräte wie Personal Computer 101, 102, 103, 104, Terminals 105, 106, 107, Laptops 108, 109, einer Workstation 110, einem Firewall-Computer 111 sowie einem Zentralcomputer 112, die über das Telekommunikationsnetz 100 miteinander sowie mit einem zentralen Verwaltungsrechner 113 gekoppelt sind.

Die Terminals 105, 106, 107 sind über Leitungen 114 mit dem Zentralrechner 112 sowie über ein lokales Netzwerk 115 mit dem zentralen Verwaltungsrechner 113 gekoppelt.

Ferner sind über den Firewall-Computer 111 die Personal Computer 101, 102, 103, 104, die Laptops 108, 109 sowie die Workstation 110 mittels Kommunikationsverbindungen 116 unter Verwendung des Internet-Protokolls mit dem zentralen Verwaltungsrechner 113 gekoppelt.

Mittels des zentralen Verwaltungsrechners 113 als zentrale Verwaltungseinheit werden die mittels des Telekommunikationsnetzes 113 miteinander gekoppelten kommunikationsfähigen Geräte gemäß dem im Weiteren beschriebenen Verfahren überwacht.

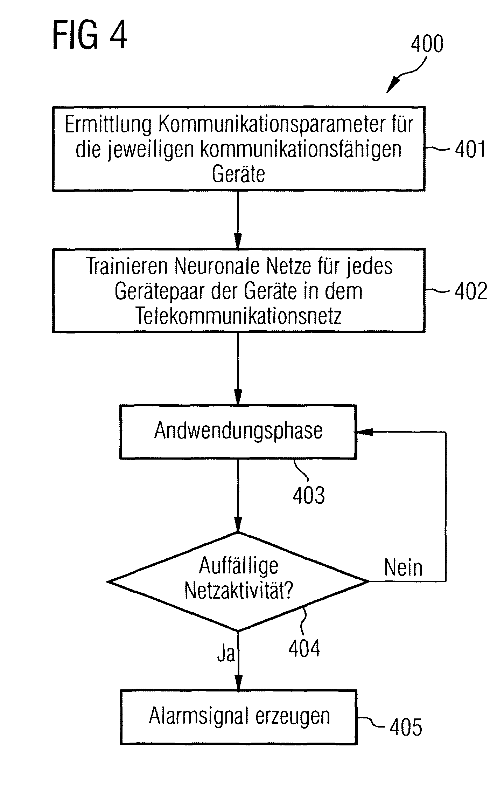

In einem ersten Schritt werden, wie im Weiteren im Detail erläutert, die einzelnen Kommunikationsparameter für die jeweiligen kommunikationsfähigen Geräte ermittelt (Schritt 401), wie in dem Ablaufdiagramm 400 in **Fig.4** dargestellt ist.

Gemäß dem Ausführungsbeispiel werden als Aktivitätsparameter folgende, die Aktivität der jeweiligen Geräte in dem Telekommunikationsnetz 100 beschreibende Größen hinsichtlich des Datenverkehrs zwischen jeweils einem Gerätepaar, das heißt jeweils zweier Geräte innerhalb des Telekommunikationsnetzes 100 ermittelt.

Es werden in einer Trainingsphase jeweils nur Daten für den Verkehr zwischen zwei Geräten ausgewählt und es werden verschiedene vorgegebene Anwendungsprogramme, beispielsweise typische Anwendungsprogramme wie ein Web-Server-Programm oder eine X-Anwendung gestartet und ausgeführt, wobei alle restlichen Geräte in dem Telekommunikationsnetz 100 ausgeschaltet sind oder die Daten für den Verkehr zwischen den zwei spezifischen Geräten beispielsweise anhand der IP-Adressen (**I**nternet **P**rotocol-Adressen) isoliert werden können.

Anschaulich wird somit jeweils nur die aufgrund der ausgeführten Applikationen bzw. der ausgeführten Dienste unmittelbar erzeugte Kommunikation bzw. Auslastung des jeweiligen Gerätes und eventuell ein Datenverkehr, das heißt eine Kommunikation zwischen den beiden ausgewählten Geräten, bei einem digitalen Datenaustauschmittel beschrieben durch die Anzahl gesendeter bzw. empfangener Datenpakete gemäß dem UDP-Protokoll innerhalb eines vorgegebenen Zeitintervalls.

Es werden für jede Anwendung und für jedes Gerätepaar, das heißt für alle möglichen Kombinationen von Anwendung/Geräten in dem Telekommunikationsnetz 100 jeweils auf die oben beschriebene Weise die folgenden Kommunikationsparameter ermittelt auf der Basis einer Anzahl einer in jeweils einem 5-Sekunden-Intervall ermittelten Anzahl von dem jeweiligen Gerät empfangenen, das heißt bei dem jeweiligen Gerät ankommenden Datenpakete werden unter Einsatz unterschiedlicher Vortransformationen, das heißt einer entsprechenden Vorverarbeitung der Kommunikationsparameter unterzogenen Datenpakete, ermittelt:

• Die Anzahl der Datenpakete, jedoch gemittelt über mehrere 5-Sekunden-Intervalle und mittels einer Normierungsfunktion optional normiert;

• ein Korrelationswert der ausgetauschten Datenpakete zwischen den Geräten über 30 Sekunden, das heißt über sechs 5-Sekunden-Intervalle bzw. 100 Sekunden, das heißt über zwanzig 5-Sekunden-Intervalle.
    Der ermittelte Korrelationswert Corr(x, y, n) wird gemäß folgender Vorschrift ermittelt:

$$Corr(x, y, n) = \frac{\sum\limits_{i=0}^{n-1}\left(x_{t-i} - \overline{x}\right) \cdot \left(y_{t-i} - \overline{y}\right)}{\sqrt{\left(\sum\limits_{i=0}^{n-1}\left(x_{t-i} - \overline{x}\right)^2\right) \cdot \left(\sum\limits_{i=0}^{n-1}\left(y_{t-i} - \overline{y}\right)^2\right)}}, \quad (1)$$

wobei mit

- n die Anzahl berücksichtigter Werte, bei 30 Sekunden somit n = 6 und bei 100 Sekunden n = 20, bezeichnet wird,
- x die jeweilige Anzahl empfangener Datenpakete des ersten Geräts zu dem entsprechend berücksichtigten Zeitpunkt bezeichnet wird,
- y die jeweilige Anzahl empfangener Datenpakete des zweiten Geräts zu dem entsprechend berücksichtigten Zeitpunkt bezeichnet wird,
- $\overline{x}, \overline{y}$ jeweils der gleitende Mittelwert der letzten n-Werte (t - n + 1) bis zu dem Zeitpunkt t des ersten bzw. des zweiten Geräts bezeichnet wird.

- Der Betrag der Differenz der jeweils ankommenden Pakete des ersten Geräts des Gerätepaars und des zweiten Geräts des Gerätepaars, das jeweils betrachtet wird;

- Der Minimum-Wert der während jeweils eines 5-Sekunden-Intervalls ermittelten Anzahl der bei einem der beiden Geräte des Gerätepaars ankommenden Datenpakete.

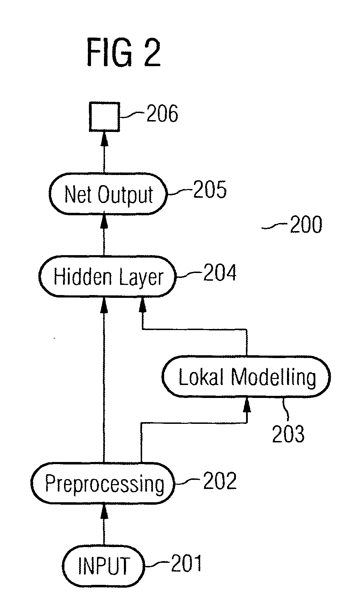

Unter Verwendung der ermittelten Kommunikationsparameter, die für eine Vielzahl von Trainingsintervallen ermittelt werden, wird jeweils für ein Trainingsintervall ein Trainingsdatum ermittelt und dem in **Fig.2** dargestellten neuronalen Netz 200 zu dessen Training zugeführt.

Das neuronale Netz 200 weist eine Eingangsschicht 201 mit zehn Eingangsneuronen auf, die über jeweils eine Eins-zu-Eins-Verbindung als Identitäts-Abbildung mit einer Vorverarbeitungsschicht 202, die ebenfalls zehn Neuronen aufweist, gekoppelt sind.

Es ist jeweils ein Neuron der Vorverarbeitungsschicht 202 mit einem Neuron der Eingangsschicht 201 gekoppelt.

Weiterhin ist eine, beispielsweise in [1] beschriebene lokale Modellierungsschicht 203 mit den Neuronen der Vorverarbeitungsschicht 202 gekoppelt.

Eine versteckte Schicht 204 mit einer grundsätzlich beliebigen Anzahl von Neuronen ist sowohl mit den Neuronen der Vorverarbeitungsschicht 202 als auch mit den Neuronen der lokalen Modellierungsschicht 203 gekoppelt.

Weiterhin ist die versteckte Schicht 204 über die Ausgänge ihrer Neuronen mit Neuronen einer Ausgangsschicht 205 gekoppelt, die Ausgabewerte 206 erzeugen.

Das Training der neuronalen Anordnung 200 erfolgt auf übliche Weise, beispielsweise mittels eines Backpropagation-Trainingsverfahrens unter Einsatz eines Pruning-Verfahrens wie beispielsweise in [1] beschrieben.

Es ist jeweils ein neuronales Netz 200 der in **Fig.2** dargestellten Struktur für jedes Gerätepaar der in dem Telekommunikationsnetz 100 enthaltenen Geräte vorgesehen und das neuronale Netz 200 wird für dieses Gerätepaar entsprechend auf die oben beschriebene Weise trainiert.

Mittels des neuronalen Netzes 200 ist es somit möglich, sowohl lokale Zusammenhänge als auch globale Zusammenhänge des Kommunikationsverhaltens des jeweiligen Gerätepaars zu modellieren.

Sind m Geräte über das Telekommunikationsnetz 100 miteinander gekoppelt, so sind $\frac{(m-1)^2}{2}$ Kombinationen Daten zu erheben und dem neuronalen Netz 200 zum Training zuzuführen.

Das gemäß dem oben beschriebenen Verfahren trainierte neuronale Netz 200 wird kopiert und liefert somit für jedes Gerätepaar bei Anlegen der Eingangsdaten eine Ausgabe. Natürlich können auch mehrere, verschiedene, spezialisierte neuronale Netze verwendet werden. Somit kann das oben beschriebene Verfahren für jedes Gerätepaar der Geräte in dem Telekommunikationsnetz durchgeführt werden, wie in Schritt 402 des Ablaufdiagramms 400 dargestellt.

Alternativ kann zur Erhöhung der Genauigkeit für verschiedene Kombinationen von Gerätetypen jeweils ein eigenes neuronales Netz trainiert werden.

Ergebnis des Schritts 402 ist dann eine Anzahl von $\frac{(m-1)^2}{2}$ gleicher oder verschiedener neuronaler Netze 200 (bei m verschiedenen Gerätetypen), die auf die oben beschriebene Weise trainiert worden sind.

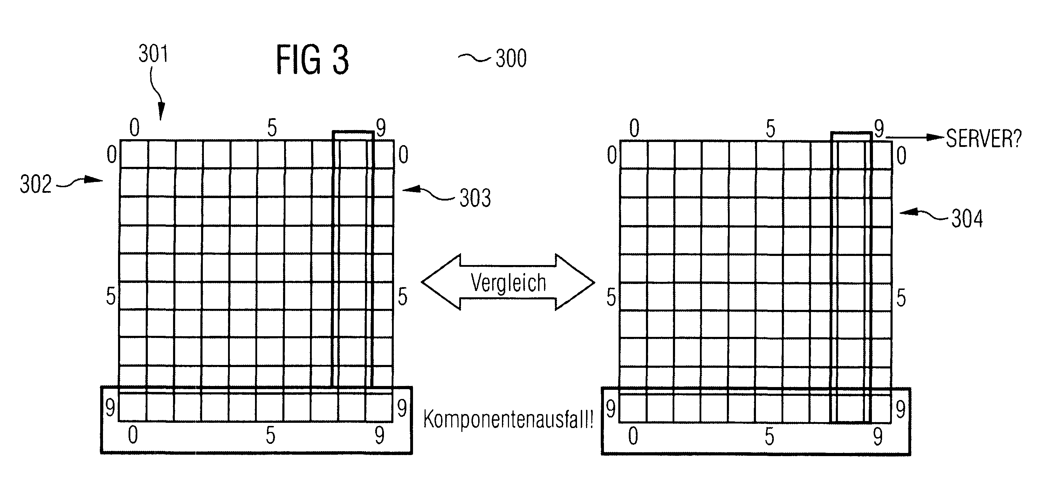

Aufgrund des Ausgabeverhaltens dieser neuronalen Netze 200 für unterschiedliche Trainingsdaten wird eine Ausgabestruktur ermittelt und beispielsweise in Form einer Matrix 300, wie sie in **Fig.3** dargestellt ist, gespeichert.

**Fig.3** zeigt in einer Matrix 300 jeweils in einer Spalte 301 bzw. einer Zeile 302 der Matrix 300, welche jeweils ein Gerät in dem Telekommunikationsnetz 100 repräsentiert, in jeweils einem Feld die dem Grad der Abhängigkeit des Netzverkehrs, das heißt der ankommenden Datenpakete aufgrund der trainierten neuronalen Netze 200, die jeweils die Abhängigkeit des Datenverkehrs zwischen den einzelnen Gerätepaaren angeben, an.

Die Felder können sowohl über eine graphische Repräsentation als auch über einen vorgebbaren Zahlenwert, der den Grad der Abhängigkeit des Datenverkehrs repräsentiert, beschrieben werden.

Anschaulich ist in **Fig.3** durch unterschiedliche Schattierung bzw. Schraffierung jeweils ein unterschiedlicher Grad der Abhängigkeit der unterschiedlichen Netzaktivitäten der jeweiligen Gerätepaare eingetragen.

Es ergibt sich somit eine graphische Abhängigkeitsstruktur, die im Weiteren als Trainingskarte 303 bezeichnet wird.

Ein zweites neuronales Modell, gemäß dem Ausführungsbeispiel ein Neuro-Fuzzy-Modell, wird anschließend eingesetzt, um abhängig von den Trainingsdaten aus der Trainingsphase die ermittelte Trainingskarte 303, die die Abhängigkeiten aus der Trainingsphase beschreibt, mittels bekannter Trainingsverfahren zu erlernen.

Während der Anwendungsphase werden die entsprechenden Aktivitätsparameter kontinuierlich ermittelt und es wird eine Anwendungskarte 304 auf die oben beschriebene gleiche Weise ermittelt, wie die Trainingskarte 303 während des Trainingsverfahrens ermittelt worden ist.

Selbstverständlich wird in der Anwendungsphase nicht jedes Gerät individuell jeweils mit einem weiteren Gerät als Gerätepaar untersucht, sondern es werden jeweils für die entsprechenden Zeitintervalle die ankommenden Datenpakete bei dem jeweiligen Gerät ermittelt. Dies erfolgt jeweils unter Verwendung der jeweiligen Adressenangaben in den Datenpaketen die der Sender bzw. Empfänger des Datenpakets ermitteln kann, wodurch die entsprechenden Korrelationen zwischen den einzelnen Gerätepaaren in der Anwendungsphase ermittelt werden.

Das sich in der Anwendungsphase ergebende Bild als Anwendungskarte 304 wird in einem weiteren Schritt (Schritt 404) mittels des Neuro-Fuzzy-Modells mit der Trainingskarte 303 verglichen.

Unterscheidet sich die Anwendungskarte 304 gemäß einem vorgegebenen Ähnlichkeitskriterium stärker als ein vorgegebener Schwellenwert, der einen Toleranzbereich aufweisen kann, so wird ein Alarmsignal generiert (Schritt 405), mit dem angezeigt wird, dass eine auffällige Netzaktivität bei mindestens einem Gerät bzw. Dienst in dem Telekommunikationsnetz 100 ermittelt worden ist aufgrund einer unterschiedlichen Kartenstruktur der Anwendungskarte 304 verglichen mit der Trainingskarte 303.

Somit kann entweder aufgrund dieses Vergleichsergebnisses, welches zu dem Alarmsignal führt, auf einen Ausfall eines oder mehrerer Geräte in dem Telekommunikationsnetz 100 geschlossen werden oder darauf, dass von einem Gerät aus ein Angriffsversuch in ein weiteres Gerät in dem Telekommunikationsnetz 100 gestartet wird, oder dass auf einem Gerät ein unbefugter Zugriffsversuch, das heißt ein Angriffsversuch, unternommen wird.

Wird keine auffällige Netzaktivität in dem Prüfungsschritt 404 ermittelt, so wird das Überwachungsverfahren in einem wiederholten Ermitteln einer Anwendungskarte 304 in einer erneuten Anwendungsphase (Schritt 403) durchgeführt.

Das Verfahren wird solange durchgeführt, bis es entweder durch den Benutzer des Netzverwaltungssystems, das heißt den Benutzer der zentralen Verwaltungseinheit 113 beendet wird, oder bis das Alarmsignal generiert worden ist (Schritt 405).

In diesem Dokument ist folgende Veröffentlichung zitiert:

[1] G.B. Orr, Neural Networks: tricks of the trade, K.-R. Müller (ed.), Berlin, Springer, ISBN 3-540-65311-2, (Lecture notes in computer science, Vol. 1524), 1998

**Patentansprüche**

1. Verfahren zum rechnergestützten Überwachen eines Telekommunikationsnetzes (100) mit einer Vielzahl von kommunikationsfähigen Geräten,

   • bei dem von zumindest einem Teil der Geräte und/oder von Diensten Aktivitätsparameter ermittelt werden, die die Aktivität des jeweiligen Geräts und/oder des jeweiligen Dienstes beschreiben,

   **dadurch gekennzeichnet, dass**

- die ermittelten Aktivitätsparameter mittels eines mit Trainingsdaten trainierten statistischen Schätzers mit einem aus ermittelten Abhängigkeiten zwischen den Geräten ermittelten Normal-Abhängigkeitsbereich verglichen werden (403), und
- aus dem Vergleich bestimmt wird, ob das Kommunikationsverhalten zumindest eines Geräts und/oder zumindest eines Dienstes in dem Telekommunikationsnetz (100)sich von dem Normal-Abhängigkeitsbereich gemäß einem vorgegebenen Kriterium unterscheidet (404).

2. Verfahren zum rechnergestützten Trainieren eines statistischen Schätzers zum Verwalten eines Telekommunikationsnetzes (100) mit einer Vielzahl von kommunikationsfähigen Geräten,

- bei dem von zumindest einem Teil der Geräte und/oder von Diensten Kommunikationsparameter ermittelt werden (401), die die Aktivität des jeweiligen Geräts und/oder des jeweiligen Dienstes beschreiben,

**dadurch gekennzeichnet, dass**

- aus den Kommunikationsparametern der Geräte und/oder Dienste mögliche Abhängigkeiten zwischen den Geräten und/oder Diensten ermittelt werden,
- aus den ermittelten Abhängigkeiten ein Normal-Abhängigkeitsbereich ermittelt wird, mit dem Abhängigkeiten zwischen den Geräten und/oder Diensten in einem Zustand im wesentlichen ohne Störungen beschrieben wird, mit dem der statische Schätzer trainiert wird (402).

3. Verfahren nach Anspruch 1 oder 2,
bei dem zumindest ein Teil der Geräte als kommunikationsfähiges Endgerät ausgestaltet ist.

4. Verfahren nach einem der Ansprüche 1 bis 3,
bei dem die Ermittlung der Aktivitätsparameter in einem vorgegebenen Zeitintervall erfolgt,

5. Verfahren nach einem der Ansprüche 1 bis 4,

- bei dem die Ermittlung der Aktivitätsparameter von dem jeweiligen Gerät durchgeführt wird, und
- bei dem die ermittelten Aktivitätsparameter an eine Verwaltungseinheit übertragen wird, in der die weiteren Verfahrensschritte durchgeführt werden.

6. Verfahren nach einem der Ansprüche 1 bis 5,
bei dem die Ermittlung der Aktivitätsparameter von einer Aktivitätsparameter-Ermittlungseinheit außerhalb des jeweiligen Geräts durchgeführt wird.

7. Verfahren nach einem der Ansprüche 1 bis 6,
bei dem als Abhängigkeiten kommunikationsbedingte Abhängigkeiten zwischen den Geräten und/oder Diensten ermittelt werden.

8. Verfahren nach einem der Ansprüche 1 bis 7,
bei dem mögliche Richtungsabhängigkeiten hinsichtlich der Kommunikationsrichtungen zwischen den Geräten und/oder Diensten ermittelt werden.

9. Verfahren nach einem der Ansprüche 1 bis 8,

- bei dem Daten von den Geräten und/oder Diensten ermittelt werden, und
- bei dem aus den Daten die Aktivitätsparameter ermittelt werden.

10. Verfahren nach einem der Ansprüche 1 bis 9,
bei dem für alle möglichen Gerätepaare und/oder Dienstepaaren jeweils zweier Geräte und/oder Dienste die Aktivitätsparameter ermittelt werden,

11. Verfahren nach Anspruch 10,

- bei dem die ermittelten Aktivitätsparameter der Gerätepaare in Form einer Matrix (300) gespeichert werden, und

- bei dem der Normal-Abhängigkeitsbereich aus der Struktur der Matrix (300) ermittelt wird.

12. Verfahren nach einem der Ansprüche 1 bis 11,
   bei dem als Aktivitätsparameter zumindest einer der folgenden Parameter ermittelt werden:

   - von dem jeweiligen Gerät und/oder Dienst gesendete Datenpakete oder von dem jeweiligen Gerät und/oder Dienst empfangene Datenpakete ermittelt werden,
   - die Prozessorauslastung des jeweiligen Geräts ermittelt werden,
   - die Anzahl vorgegebener Systemfunktionsaufrufe,
   - die Existenz vorgegebener Prozesse bzw. vorgegebener Computerprogramme.

13. Verfahren nach einem der Ansprüche 1 bis 12,
   bei dem als statistischer Schätzer ein Neuro-Fuzzy-Modell verwendet wird.

14. Verfahren nach einem der Ansprüche 1 bis 13,
   bei dem für den Fall, dass sich mindestens ein Gerät in dem Telekommunikationsnetz (100) von dem Normal-Abhängigkeitsbereich gemäß dem vorgegebenen Kriterium unterscheidet, ein Alarmsignal generiert wird.

15. Verfahren nach einem der Ansprüche 1 bis 14,
   eingesetzt zum Ermitteln einer Störung eines Geräts in dem Telekommunikationsnetz (100) und/oder zum Ermitteln eines unbefugten Zugriffsversuchs auf ein oder von einem Gerät in dem Telekommunikationsnetz (100).

16. Vorrichtung zum rechnergestützten Überwachen eines Telekommunikationsnetzes (100) mit einer Vielzahl von kommunikationsfähigen Geräten,
   mit einem Prozessor, der derart eingerichtet ist, dass folgende Schritte durchführbar sind:

   - von zumindest einem Teil der Geräte und/oder von Diensten werden Aktivitätsparameter ermittelt, die die Aktivität des jeweiligen Geräts und/oder des jeweiligen Dienstes beschreiben,

   **dadurch gekennzeichnet, dass**

   - die ermittelten Aktivitätsparameter mittels eines mit Trainingsdaten trainierten statistischen Schätzers mit einem aus ermittelten Abhängigkeiten zwischen den Geräten ermittelten Normal-Abhängigkeitsbereich verglichen werden (403), und
   - aus dem Vergleich bestimmt wird, ob das Kommunikationsverhalten zumindest eines Geräts und/oder zumindest eines Dienstes in dem Telekommunikationsnetz (100) sich von dem Normal-Abhängigkeitsbereich gemäß einem vorgegebenen Kriterium unterscheidet (404).

17. Computerlesbares Speichermedium, in dem ein Computerprogramm zum rechnergestützten Überwachen eines Telekommunikationsnetzes (100) mit einer Vielzahl von kommunikationsfähigen Geräten gespeichert ist, das, wenn es von einem Prozessor ausgeführt wird, folgende Verfahrensschritte aufweist:

   - von zumindest einem Teil der Geräte und/oder von Diensten werden Aktivitätsparameter ermittelt, die die Aktivität des jeweiligen Geräts und/oder des jeweiligen Dienstes beschreiben,

   **dadurch gekennzeichnet, dass**

   - die ermittelten Aktivitätsparameter mittels eines mit Trainingsdaten trainierten statistischen Schätzers mit einem aus ermittelten Abhängigkeiten zwischen den Geräten ermittelten Normal-Abhängigkeitsbereich verglichen werden (403), und
   - aus dem Vergleich bestimmt wird, ob das Kommunikationsverhalten zumindest eines Geräts und/oder zumindest eines Dienstes in dem Telekommunikationsnetz (100) sich von dem Normal-Abhängigkeitsbereich gemäß einem vorgegebenen Kriterium unterscheidet (404).

18. Computerprogramm-Element zum rechnergestützten Überwachen eines Telekommunikationsnetzes (100) mit einer Vielzahl von kommunikationsfähigen Geräten, das, wenn es von einem Prozessor ausgeführt wird, folgende Verfahrensschritte aufweist:

- von zumindest einem Teil der Geräte und/oder von Diensten werden Aktivitätsparameter ermittelt, die die Aktivität des jeweiligen Geräts und/oder des jeweiligen Dienstes beschreiben,

**dadurch gekennzeichnet, dass**

- die ermittelten Aktivitätsparameter mittels eines mit Trainingsdaten trainierten statistischen Schätzers mit einem aus ermittelten Abhängigkeiten zwischen den Geräten ermittelten Normal-Abhängigkeitsbereich verglichen werden (403), und
- aus dem Vergleich bestimmt wird, ob das Kommunikationsverhalten zumindest eines Geräts und/oder zumindest eines Dienstes in dem Telekommunikationsnetz (100) sich von dem Normal-Abhängigkeitsbereich gemäß einem vorgegebenen Kriterium unterscheidet (404).

19. Computerlesbares Speichermedium, in dem ein Computerprogramm zum rechnergestützten Trainieren eines statistischen Schätzers zum Verwalten eines Telekommunikationsnetzes (100) mit einer Vielzahl von kommunikationsfähigen Geräten gespeichert ist, das, wenn es von einem Prozessor ausgeführt wird, folgende Verfahrensschritte aufweist:

- von zumindest einem Teil der Geräte und/oder von Diensten werden Aktivitätsparameter ermittelt, die die Aktivität des jeweiligen Geräts und/oder des jeweiligen Dienstes beschreiben,

**dadurch gekennzeichnet, dass**

- aus den Aktivitätsparameter der Geräte und/oder Dienste mögliche Abhängigkeiten zwischen den Geräten und/oder Diensten ermittelt werden,
- aus den ermittelten Abhängigkeiten ein Normal-Abhängigkeitsbereich ermittelt wird, mit dem Abhängigkeiten zwischen den Geräten und/oder Diensten in einem Zustand im wesentlichen ohne Störungen beschrieben wird, mit dem der statische Schätzer trainiert wird (402).

20. Computerprogramm-Element zum rechnergestützten Trainieren eines statistischen Schätzers zum Verwalten eines Telekommunikationsnetzes (100) mit einer Vielzahl von kommunikationsfähigen Geräten, das, wenn es von einem Prozessor ausgeführt wird, folgende Verfahrensschritte aufweist:

- von zumindest einem Teil der Geräte und/oder von Diensten werden Aktivitätsparameter ermittelt, die die Aktivität des jeweiligen Geräts und/oder des jeweiligen Dienstes beschreiben,

**dadurch gekennzeichnet, dass**

- aus den Aktivitätsparametern der Geräte und/oder Dienste mögliche Abhängigkeiten zwischen den Geräten und/oder Diensten ermittelt werden,
- aus den ermittelten Abhängigkeiten ein Normal-Abhängigkeitsbereich ermittelt wird, mit dem Abhängigkeiten zwischen den Geräten und/oder Diensten in einem Zustand im wesentlichen ohne Störungen beschrieben wird, mit dem der statische Schätzer trainiert wird (402).

**Claims**

1. Method for the computer-aided monitoring of a telecommunication network (100) comprising a multiplicity of devices capable of communication,

- in which activity parameters, which describe the activity of the respective device and/or of the respective service, are determined from at least some of the devices and/or services,

**characterized in that**

- the activity parameters determined are compared, by means of a statistical estimator trained with training data, with a normal range of dependence determined from dependences determined between the devices (403), and
- it is determined from the comparison whether the communication performance of at least one device and/or of at least one service in the telecommunication network (100) differs from the normal range of dependence in accordance with a predetermined criterion (404).

2. Method for the computer-aided training of a statistical estimator for administering a telecommunication network (100) comprising a multiplicity of devices capable of communication,

- in which communication parameters which describe the activity of the respective device and/or of the respective service are determined from at least some of the devices and/or services (401),

**characterized in that**

- possible dependences between the devices and/or services are determined from the communication parameters of the devices and/or services,
- a normal range of dependence, by means of which dependences between the devices and/or services in a state which is essentially without disturbances are described, by means of which the statistical estimator is trained, is determined from the dependences determined (402).

3. Method according to Claim 1 or 2, in which at least some of the devices are constructed as terminals capable of communication.

4. Method according to one of Claims 1 to 3, in which the activity parameters are determined within a predetermined time interval.

5. Method according to one of Claims 1 to 4,

- in which the activity parameters are determined by the respective device, and
- in which the activity parameters determined are transmitted to an administration unit in which the further method steps are carried out.

6. Method according to one of Claims 1 to 5, in which the activity parameters are determined by an activity parameter determining unit outside the respective device.

7. Method according to one of Claims 1 to 6, in which communication-dependent dependences between the devices and/or services are determined as dependences.

8. Method according to one of Claims 1 to 7, in which possible directional dependences with regard to the directions of communication between the devices and/or services are determined.

9. Method according to one of Claims 1 to 8,

- in which the data of the devices and/or services are determined, and
- in which the activity parameters are determined from the data.

10. Method according to one of Claims 1 to 9, in which the activity parameters are determined for all possible pairs of devices and/or pairs of services for in each case two devices and/or services.

11. Method according to Claim 10,

- in which the activity parameters determined for the device pairs are stored in the form of a matrix (300), and
- in which the normal range of dependence is determined from the structure of the matrix (300).

12. Method according to one of Claims 1 to 11, in which at least one of the following parameters is determined as activity parameter:

- data packets sent by the respective device and/or service or data packets received by the respective device and/or service are determined,
- the processor utilization of the respective device is determined,
- the number of predetermined system function calls,
- the existence of predetermined processes or of predetermined computer programs.

**13.** Method according to one of Claims 1 to 12, in which a neuro-fuzzy model is used as statistical estimator.

**14.** Method according to one of Claims 1 to 13, in which in the case where at least one device in the telecommunication network (100) differs from the normal range of dependence in accordance with the predetermined criterion, an alarm signal is generated.

**15.** Method according to one of Claims 1 to 14, used for determining a disturbance of a device in the telecommunication network (100) and/or for determining an unauthorized attempt at accessing to a device or by a device in the telecommunication network (100).

**16.** Device for the computer-aided monitoring of a telecommunication network (100) comprising a multiplicity of devices capable of communication, comprising a processor which is set up in such a manner that the following steps can be carried out:

- activity parameters which describe the activity of the respective device and/or of the respective service are determined from at least some of the devices and/or services,

    **characterized in that**

- the activity parameters determined are compared, by means of a statistical estimator trained with training data, with a normal range of dependence determined from dependences determined between the devices (403), and
- it is determined from the comparison whether the communication performance of at least one device and/or of at least one service in the telecommunication network (100) differs from the normal range of dependence in accordance with a predetermined criterion (404).

**17.** Computer-readable storage medium in which a computer program for the computer-aided monitoring of a telecommunication network (100) comprising a multiplicity of devices capable of communication is stored which, when it is executed by a processor, has the following method steps:

- activity parameters which describe the activity of the respective device and/or of the respective service are determined from at least some of the devices and/or services,

    **characterized in that**

- the activity parameters determined are compared, by means of a statistical estimator trained with training data, with a normal range of dependence determined from dependences determined between the devices (403), and
- it is determined from the comparison whether the communication performance of at least one device and/or of at least one service in the telecommunication network (100) differs from the normal range of dependence in accordance with a predetermined criterion (404).

**18.** Computer program element for the computer-aided monitoring of a telecommunication network (100) comprising a multiplicity of devices capable of communication which, when it is executed by a processor, has the following method steps:

- activity parameters which describe the activity of the respective device and/or of the respective service are determined from at least some of the devices and/or services,

    **characterized in that**

- the activity parameters determined are compared, by means of a statistical estimator trained with training data, with a normal range of dependence determined from dependences determined between the devices (403), and
- it is determined from the comparison whether the communication performance of at least one device and/or of at least one service in the telecommunication network (100) differs from the normal range of dependence in accordance with a predetermined criterion (404).

**19.** Computer-readable storage medium in which a computer program for the computer-aided training of a statistical estimator for administering a telecommunication network (100) comprising a multiplicity of devices capable of communication is stored which, when it is executed by a processor, has the following method steps:

- activity parameters which describe the activity of the respective device and/or of the respective service are determined from at least some of the devices and/or services,

**characterized in that**

- possible dependences between the devices and/or services are determined from the activity parameters of the devices and/or services,
- a normal range of dependence, by means of which dependences between the devices and/or services in a state which is essentially without disturbances are described, by means of which the statistical estimator is trained, is determined from the dependencies determined (402).

20. Computer program element for the computer-aided training of a statistical estimator for administering a telecommunication network (100) comprising a multiplicity of devices capable of communication which, when it is executed by a processor, has the following method steps:

- activity parameters which describe the activity of the respective device and/or of the respective service are determined from at least some of the devices and/or services,

**characterized in that**

- possible dependences between the devices and/or services are determined from the activity parameters of the devices and/or services,
- a normal range of dependence, by means of which dependences between the devices and/or services in a state which is essentially without disturbances are described, by means of which the statistical estimator is trained, is determined from the dependencies determined (402).

**Revendications**

1. Procédé pour la surveillance assistée par ordinateur d'un réseau de télécommunications (100) comprenant une pluralité d'appareils capables de communiquer,

- dans lequel sont déterminés par au moins une partie des appareils et/ou par des services, des paramètres d'activité décrivant l'activité de l'appareil respectif et/ou du service respectif,

**caractérisé en ce que**

- les paramètres d'activité déterminés sont comparés au moyen d'un estimateur statistique, entraîné avec des données d'entraînement, avec un domaine de dépendance normal déterminé à partir des dépendances déterminées entre les appareils (403), et
- à partir de la comparaison est déterminé si le comportement de communication d'au moins un appareil et/ou d'au moins un service dans le réseau de télécommunications (100) diffère du domaine de dépendance normal selon un critère prédéfini (404).

2. Procédé pour l'entraînement assisté par ordinateur d'un estimateur statistique pour la gestion d'un réseau de télécommunications (100) comprenant une pluralité d'appareils capables de communiquer,

- dans lequel sont déterminés par au moins une partie des appareils et/ou par des services, des paramètres de communication (401) décrivant l'activité de l'appareil respectif et/ou du service respectif,

**caractérisé en ce que**

- à partir des paramètres de communication des appareils et/ou services sont déterminées de possibles dépendances entre les appareils et/ou services,
- à partir des dépendances déterminées est déterminé un domaine de dépendance normal utilisé pour décrire des dépendances entre les appareils et/ou services dans un état essentiellement dépourvu de perturbations utilisé pour entraîner l'estimateur statistique (402).

**3.** Procédé selon la revendication 1 ou 2,
dans lequel au moins une partie des appareils est configurée comme terminal capable de communiquer.

**4.** Procédé selon l'une des revendications 1 à 3,
dans lequel la détermination des paramètres d'activité a lieu dans un intervalle de temps prédéfini.

**5.** Procédé selon l'une des revendications 1 à 4,

  • dans lequel la détermination des paramètres d'activité est effectuée par l'appareil respectif lui-même, et
  • dans lequel les paramètres d'activité déterminés sont transmis à une unité de gestion dans laquelle sont effectuées les autres étapes du procédé.

**6.** Procédé selon l'une des revendications 1 à 5,
dans lequel la détermination des paramètres d'activité est effectuée par une unité de détermination de paramètres d'activité au dehors de l'appareil respectif.

**7.** Procédé selon l'une des revendications 1 à 6,
dans lequel sont déterminées comme dépendances des dépendances dues à la communication entre les appareils et/ou services.

**8.** Procédé selon l'une des revendications 1 à 7,
dans lequel sont déterminées de possibles dépendances directionnelles au niveau des directions de communication entre les appareils et/ou services.

**9.** Procédé selon l'une des revendications 1 à 8,

  • dans lequel des données sont déterminées par les appareils et/ou services et
  • dans lequel les paramètres d'activité sont déterminés à partir des données.

**10.** Procédé selon l'une des revendications 1 à 9,
dans lequel les paramètres d'activité sont déterminés pour toutes les possibles paires d'appareils et/ou paires de services d'à chaque fois deux appareils et/ou services.

**11.** Procédé selon la revendication 10,

  • dans lequel les paramètres d'activité déterminés des paires d'appareils sont enregistrés sous forme de matrice (300), et
  • dans lequel le domaine de dépendance normal est déterminé à partir de la structure de la matrice (300).

**12.** Procédé selon l'une des revendications 1 à 11,
dans lequel au moins un des paramètres suivants est déterminé comme paramètre d'activité :

  • paquets de données envoyés par l'appareil et/ou le service respectif ou paquets de données reçus par l'appareil et/ou le service respectif,
  • charge du processeur de l'appareil respectif,
  • nombre d'appels prédéfinis aux fonctions système,
  • existence de processus prédéfinis resp. de programmes d'ordinateur prédéfinis.

**13.** Procédé selon l'une des revendications 1 à 12,
dans lequel un modèle neuronal flou est utilisé comme estimateur statistique.

**14.** Procédé selon l'une des revendications 1 à 13,
dans lequel un signal d'alarme est généré si au moins un appareil dans le réseau de télécommunications (100) diffère du domaine de dépendance normal selon le critère prédéfini.

**15.** Procédé selon l'une des revendications 1 à 14,
utilisé pour identifier une perturbation d'un appareil dans le réseau de télécommunications (100) et/ou pour identifier une tentative d'accès non autorisé à ou par un appareil dans le réseau de télécommunications (100).

**16.** Dispositif pour la surveillance assistée par ordinateur d'un réseau de télécommunications (100) comprenant une pluralité d'appareils capables de communiquer,
doté d'un processeur configuré de manière que les étapes suivantes puissent être effectuées :

- par au moins une partie des appareils et/ou par des services sont déterminés des paramètres d'activité décrivant l'activité de l'appareil respectif et/ou du service respectif,

**caractérisé en ce que**

- les paramètres d'activité déterminés sont comparés au moyen d'un estimateur statistique, entraîné avec des données d'entraînement, avec un domaine de dépendance normal déterminé à partir des dépendances déterminées entre les appareils (403), et
- à partir de la comparaison est déterminé si le comportement de communication d'au moins un appareil et/ou d'au moins un service dans le réseau de télécommunications (100) diffère du domaine de dépendance normal selon un critère prédéfini (404).

**17.** Support d'enregistrement lisible par ordinateur, sur lequel est enregistré un programme d'ordinateur pour la surveillance assistée par ordinateur d'un réseau de télécommunications (100) comprenant une pluralité d'appareils capables de communiquer, qui, s'il est exécuté par un processeur, comprend les étapes suivantes du procédé :

- par au moins une partie des appareils et/ou par des services sont déterminés des paramètres d'activité décrivant l'activité de l'appareil respectif et/ou du service respectif,

**caractérisé en ce que**

- les paramètres d'activité déterminés sont comparés au moyen d'un estimateur statistique, entraîné avec des données d'entraînement, avec un domaine de dépendance normal déterminé à partir des dépendances déterminées entre les appareils (403), et
- à partir de la comparaison est déterminé si le comportement de communication d'au moins un appareil et/ou d'au moins un service dans le réseau de télécommunications (100) diffère du domaine de dépendance normal selon un critère prédéfini (404).

**18.** Elément de programme d'ordinateur pour la surveillance assistée par ordinateur d'un réseau de télécommunications (100) comprenant une pluralité d'appareils capables de communiquer, qui, s'il est exécuté par un processeur, comprend les étapes suivantes du procédé :

- par au moins une partie des appareils et/ou par des services sont déterminés des paramètres d'activité décrivant l'activité de l'appareil respectif et/ou du service respectif,

**caractérisé en ce que**

- les paramètres d'activité déterminés sont comparés au moyen d'un estimateur statistique, entraîné avec des données d'entraînement, avec un domaine de dépendance normal déterminé à partir des dépendances déterminées entre les appareils (403), et
- à partir de la comparaison est déterminé si le comportement de communication d'au moins un appareil et/ou d'au moins un service dans le réseau de télécommunications (100) diffère du domaine de dépendance normal selon un critère prédéfini (404).

**19.** Support d'enregistrement lisible par ordinateur, sur lequel est enregistré un programme d'ordinateur pour l'entraînement assisté par ordinateur d'un estimateur statistique pour la gestion d'un réseau de télécommunications (100) comprenant une pluralité d'appareils capables de communiquer, qui, s'il est exécuté par un processeur, comprend les étapes suivantes du procédé :

- par au moins une partie des appareils et/ou par des services sont déterminés des paramètres d'activité décrivant l'activité de l'appareil respectif et/ou du service respectif,

**caractérisé en ce que**

- à partir des paramètres d'activité des appareils et/ou services sont déterminées de possibles dépendances entre les appareils et/ou services,
- à partir des dépendances déterminées est déterminé un domaine de dépendance normal utilisé pour décrire des dépendances entre les appareils et/ou services dans un état essentiellement dépourvu de perturbations utilisé pour entraîner l'estimateur statistique (402).

20. Elément de programme d'ordinateur pour l'entraînement assisté par ordinateur d'un estimateur statistique pour la gestion d'un réseau de télécommunications (100) comprenant une pluralité d'appareils capables de communiquer, qui, s'il est exécuté par un processeur, comprend les étapes suivantes du procédé :

- par au moins une partie des appareils et/ou par des services sont déterminés des paramètres d'activité décrivant l'activité de l'appareil respectif et/ou du service respectif,

**caractérisé en ce que**

- à partir des paramètres d'activité des appareils et/ou services sont déterminées de possibles dépendances entre les appareils et/ou services,
- à partir des dépendances déterminées est déterminé un domaine de dépendance normal utilisé pour décrire des dépendances entre les appareils et/ou services dans un état essentiellement dépourvu de perturbations utilisé pour entraîner l'estimateur statistique (402).

# FIG 1

103

104

116

105

116

109

116

116

111

114

114

106

Viren

116

112

107

116

102

116

116

110

115

100

101

116

113

116

108

18

EP 1 223 709 B1

# FIG 2

☐ ─206

Net Output ─205

─200

Hidden Layer ─204

Lokal Modelling

203

Preprocessing ─202

INPUT ─201

FIG 3

Vergleich

SERVER?

Komponentenausfall!

# FIG 4

400

```
┌─────────────────────────────────────┐
│ Ermittlung Kommunikationsparameter für │
│   die jeweiligen kommunikationsfähigen │──── 401
│              Geräte                    │
└─────────────────────────────────────┘
                  │
                  ▼
┌─────────────────────────────────────┐
│   Trainieren Neuronale Netze für jedes │
│     Gerätepaar der Geräte in dem      │──── 402
│        Telekommunikationsnetz          │
└─────────────────────────────────────┘
                  │
                  ▼
┌─────────────────────────────────────┐
│          Andwendungsphase             │◄─────┐
└─────────────────────────────────────┘      │
                  │                           │
                 403                          │
                  │                           │
                  ▼                           │
             ◇─────────◇                      │
            ╱           ╲        Nein          │
           ╱  Auffällige  ╲─────────────────────┘
           ╲ Netzaktivität?╱
            ╲             ╱
             ◇─────────◇
              │   404
             Ja
              │
              ▼
┌─────────────────────────────────────┐
│        Alarmsignal erzeugen           │──── 405
└─────────────────────────────────────┘
```